# EUROPEAN PATENT APPLICATION

(11) **EP 4 644 235 A1**
(43) Date of publication of application: **05.11.2025**
(21) Application number: 24275058.6
(22) Date of filing: 03.05.2024
(51) Int. Cl.: B64C 13/04, B64D 31/04, B64C 13/50

(54) **ACTIVE THROTTLE ASSEMBLY**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

An active throttle assembly comprising a grip (202) which is moveable linearly and a mount (204) to which the grip is attached. The mount and the grip are moveable together. The active throttle assembly also includes a rotary actuator (214) and a connector arranged to connect the rotary actuator to the mount, the connector comprising a rotatable portion (212) connected to the rotary actuator, wherein rotational movement of the rotary actuator is coupled to rotational movement of the rotatable portion, and a linearly moveable portion (210) connected to the rotatable portion, wherein rotation of the rotatable portion is coupled to linear movement of the linearly moveable portion. The mount is attached to the linearly moveable portion. The rotary actuator is configured to control, via the connector, a position of the grip, the rotary actuator moving rotationally in response to a control signal. The active throttle assembly also includes at least one detector (218) arranged to measure at least one of a kinematic variable associated with the grip and a force applied to the grip.

## Description

### FIELD

The present invention relates to active throttles for vehicles and in particular, aircraft (e.g. rotary, fixed or blend).

### BACKGROUND

With the advent of fly by wire technologies, the direct mechanical connection between the throttle of an aircraft and the engines was replaced by an electrical connection, with the engines being controlled based on a sensed position of the throttle (e.g. of the throttle lever or of the moveable grip). The advent of active throttles has allowed tactile cueing to be utilised to reduce the workload of the pilot when flying in demanding situations. Active throttles have been developed to provide this haptic feedback to the pilot. An active throttle assembly includes one or more actuators which can be driven by a control signal (e.g. based on actual aircraft conditions) to provide haptic feedback to the pilot. However, such active throttles tend to be rotary throttles. Such rotary throttles can have a movement which feels unnatural to a pilot and thus make it harder for a pilot to accurately control the engine of an aircraft. In contrast, linear throttles generally provide a more natural control enabling the pilot to have increased control over the aircraft.

### SUMMARY

Disclosed herein are various embodiments of an active throttle assembly comprising a grip which is moveable linearly and a mount to which the grip is attached. The mount and the grip are moveable together. The active throttle assembly also includes a rotary actuator and a connector arranged to connect the rotary actuator to the mount, the connector comprising a rotatable portion connected to the rotary actuator, wherein rotational movement of the rotary actuator is coupled to rotational movement of the rotatable portion, and a linearly moveable portion connected to the rotatable portion, wherein rotation of the rotatable portion is coupled to linear movement of the linearly moveable portion. The mount is attached to the linearly moveable portion. The rotary actuator is configured to control, via the connector, a position of the grip, the rotary actuator moving rotationally in response to a control signal. The active throttle assembly also includes at least one detector arranged to measure at least one of a kinematic variable associated with the grip and a force applied to the grip.

The disclosed embodiments combine a rotary actuator with a throttle grip which moves in a linear manner, such that when the pilot interacts with the throttle grip the movement is linear. This allows for ease of use by the pilot, because in typical throttle installation locations, linear movement of the pilot's hand is more natural, comfortable and easy. Also, previous platforms have used linear passive throttles, and so linearly moving throttles are more familiar to pilots. Using a rotary actuator is advantageous because they are readily available, their control is well understood and they have improved power output per unit size. The disclosed invention therefore allows for a rotary actuator to be used in combination with a linearly moving throttle grip.

Optionally the active throttle assembly includes a linear guide wherein the mount is mounted upon the linear guide and the mount and the grip are moveable together along the linear guide. The position of the grip is a position of the grip on the linear guide. A linear guide helps to support the mount and the grip and helps to constrain the motion of the mount and the grip to linear motion.

In some examples the rotatable portion of the connector comprises a timing belt sprocket and the linearly moveable portion of the connector comprises a portion of a timing belt. Advantages of a timing belt include low inertia and low mass, which means that the size and mass of the motor and the throttle unit are reduced.

The timing belt may be a toothed timing belt. Teeth allow the transmission of greater torque and thus pilot loads, allowing the active system to create larger stops and ramps. Teeth also permit lower backlash.

In various examples the throttle assembly includes a timing belt tensioning device which controls tension in the timing belt. When there is more tension in the timing belt, friction in the system increases. Less tension in the timing belt may introduce backlash. The timing belt may therefore be configured so as the timing belt is backlash free but not introduce too much tension into the system.

The timing belt tensioning device may be a cam nut. A cam nut is mechanically simple and straightforward to assemble. A cam nut has the effect of taking out other build tolerances which are harder or more expensive to control.

Some embodiments of the invention include two timing belt sprockets, each located at opposite ends of the timing belt. This provides support for the timing belt. The timing belt may alternatively be supported by a hub.

In some embodiments, the rotatable portion of the connector comprises a screw and the linearly moveable portion of the connector comprises a screw nut. Using a screw and a screw nut advantageously reduces system inertia, and is relatively cheap to produce.

The screw may be a ball screw and the screw nut may be a ball screw nut. Ball screws are capable of carrying heavy loads, they are less rigid and also do not self-lock. Ball screws also advantageously offer high precision, accuracy and efficiency. They are also easier to backdrive and with less friction. Furthermore, they allow additional gearing, providing greater forces or velocities for a given motor choice.

The screw may be a lead screw and screw nut may be a lead screw nut. Lead screws offer precise and accurate linear motion, are more straightforward to manufacture and have a large load carrying capability. Lead screws also allow for additional gearing. Lead screws are lightweight and have less inertia.

Force applied to the grip may be measured using a force sensor. A kinematic variable associated with a variable may be measured using a linear or rotary position sensor, a velocity sensor or an acceleration sensor. Velocity may be measured using: a brushless resolver which outputs velocity during demodulation, a moving coil type velocity transducer, a piezo electric velocity sensor or any other suitable means for measuring velocity. Acceleration may be measured using an accelerometer, or using any position or velocity based signal that is differentiated to form a second order derivative of time, or using any other suitable means.

A linear position sensor measures linear position and can be positioned on any linearly moving part of the throttle assembly in order to determine grip position.

Examples of linear position sensors include a linearly variable differential transformer, LVDT, or an optical linear track sensor.

In some examples, the linear position sensor is attached to the mount. This enables accurate position detection since the sensor is in the same position as the mount and also the grip (since the grip and the mount are moveable linearly together) at all times and there is no conversion needed between sensed position at the sensor and the position of the mount.

Examples of rotary position sensors include a rotational variable differential transformer, RVDT, a rotary potentiometer or a resolver. A rotational position sensor may be located at any rotationally moving part of the throttle assembly. Mounting a rotary position sensor to a rotationally moving part of the throttle assembly leads to reduced number of parts and lower mass along with improved accuracy of position measurements. In other examples, the rotary position sensor is mounted to another part of the throttle assembly and is connected to a rotationally moving part for example via a pantograph type arm.

Examples of force sensors include an elastic element combined with a position sensor, an electrical resistance strain gauge, a foil strain gauge, a semiconductor strain gauge, a thin film strain gauge, a wire strain gauge, a piezoelectric transducer, a hydraulic load cell, a pneumatic load cell, a magno elastic force sensor, a vibration element, an induction based force sensor, a linearly variable differential transformer based force sensor. The force sensor may be located in any location between the grip and the motor. When the force sensor is located closer to the grip, fewer errors arise from mechanical effects such as backlash, friction, dynamic modes or the bending of internal components. In various examples, the force sensor is positioned just under the grip.

In some embodiments, the force sensor is attached to the mount or the grip. This is advantageous because the force sensor can detect the force applied to the grip even when the grip is not able to move because of a jam in the system. Therefore, the detected force can be used by the flight control system in order to control the plane even when the throttle cannot move.

Some examples of active linear throttles disclosed herein include a rotary motor and a current detector arranged to measure current applied to the rotary motor. Current applied to the rotary motor can be used to derive force applied to the grip. In some embodiments, force values are determined only using motor current without the need for a separate force sensor. This results in lower cost and lower part count. Alternatively, force is determined using motor current and using a force sensor. This can provide advantageous redundancy, increasing the accuracy and reliability of force detection. Current applied to the rotary motor can also be used by system monitors to check the health of the throttle system and flag errors in cases of failure.

In various examples, the active throttle assembly comprises a first limiter and a second limiter, wherein the mount is moveable linearly between the first limiter and the second limiter. Including limiters in the throttle assembly restricts the range of motion of the grip and the mount along the linear guide. This means that the movement of the grip can be constrained to linear motion. Furthermore the range can be determined such that the range of motion is comfortable for the pilot.

The linear guide may be a linear rail. A linear rail, which may be combined with a linear bearing, provides a smooth motion to the pilot and supports any induced loads. In other examples, the linear guide may be a dovetail slider, an M type rail, a V type rail, a profiled slider or a round shaft.

The control signal can be determined based on a measurement of the at least one kinematic variable associated with the grip and/or a measurement of the force applied to the grip. This means that feedback is provided from the measurements of kinematic variables or force, enabling the active feel of the active throttle assembly.

Examples of kinematic variables include position, velocity and acceleration. Measuring position, velocity or acceleration means that position, velocity or acceleration data can be used by either the flight control system or the throttle control system in order to control the aeroplane or provide haptic feedback to the pilot respectively. In some examples, any combination of position, velocity and acceleration are measured in order to supply more data to the flight or throttle control system thus improving the accuracy of flight control or haptic feedback.

### BRIEF DESCRIPTION OF THE FIGURES

Embodiments of the invention will now be described by way of example only with reference to the figures, in which:
Figure 1a is a schematic diagram of an example active linear throttle assembly.
Figure 1b is a schematic diagram of an example active linear throttle assembly, a throttle control system and a flight control system.
Figure 2a is a schematic diagram of an example active linear throttle assembly.
Figure 2b is a schematic diagram of an example active linear throttle assembly.
Figure 3a is a schematic diagram of an example active linear throttle assembly.
Figure 3b is a schematic diagram of an example active linear throttle assembly.
Figure 4 is a schematic diagram of an example method for controlling an active throttle assembly.
Figure 5 is a schematic diagram of a computing device.
Figure 6 is a schematic diagram of an example vehicle.

### DETAILED DESCRIPTION

Active throttles have been developed to provide haptic feedback to the pilot. This active feedback may be indicative of actual aircraft conditions but also may provide other feedback to pilots, e.g. in the form of soft stops (e.g. so that the pilot has to exert additional force to override a soft stop), gradients, gates, etc. Active throttles differ from auto-throttles (also referred to as back-driven throttles) which include an actuator but only provide simple feedback of the current throttle setting, e.g. by moving the throttle to reflect operation of the autopilot when engaged.

Data relating to force or kinematic variables such as position and velocity are used by a flight control system to control the aircraft engines. In addition or as an alternative, control system uses the data as input data to control one or more actuators e.g. to determine what haptic feedback to provide via the throttle handle. The input data is used to control the actuator which provides haptic feedback to the pilot.

Many throttles are rotary throttles, comprising a grip attached to a lever. The grip moves along a path defined by an arc of a circle, and is attached via the lever to a rotary actuator or motor. The present invention by contrast relates to a throttle assembly which includes a throttle grip which arranged to move linearly. The term linear motion is used herein to describe motion by a throttle grip in a straight line. When the grip moves when gripped by the pilot, the feel of the movement of the pilot's hand to the pilot is linear. Linear movement allows for ease of use by the pilot, because in typical throttle installation locations, linear movement of the pilot's hand is more natural, comfortable and easy. Also, previous platforms have used linear passive throttles, for example where the pilot is familiar with a linearly moving throttle and so linearly moving throttles are more familiar to pilots.

Various active linear throttle assemblies (which may also be called an active linear throttle unit) described herein include a grip which is moveable linearly and a rotary actuator to provide haptic feedback to the pilot. Using a rotary actuator is advantageous because they are readily available, their control is well understood and they have improved power output per unit size.

In the examples described herein, the grip is attached to a mount. The grip and the mount are moveable together in a linear manner. A connector connects the rotary actuator to the mount. This means that rotary motion of the rotary actuator causes linear motion of the grip together with the mount along the linear guide.

The active linear throttle assembly arrangements described herein may be used for single / independent pilot operation and also in systems where the controls of the pilot and co-pilot are linked, e.g. systems where movement of the throttle by the pilot results in the co-pilot's throttle moving so that the throttle grips are in the same position. Where the controls of the pilot and co-pilot are linked, one pilot can feel the actions of the other pilot which allows the pilots to communicate with each other. In most cases, the active linear throttle assembly arrangements described herein are used in a single or double throw active linear throttle assembly (which can also be referred to as a single axis active linear throttle assembly or a double axes active linear throttle assembly).

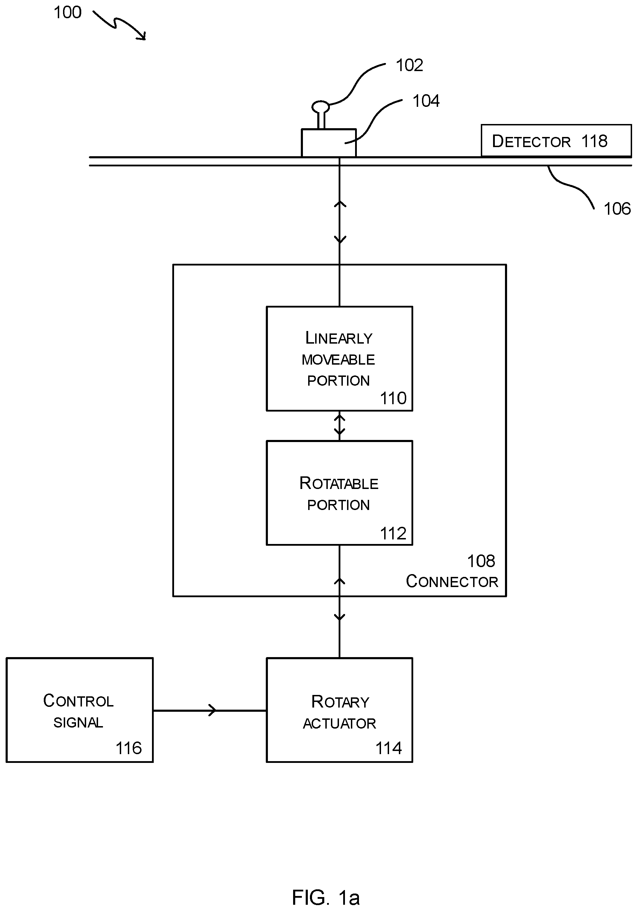

Figure 1a is a schematic diagram of an active linear throttle assembly comprising a grip 102 which is attached to a mount 104. The grip provides a grippable, shaped element (e.g. in the form of a plate or knob). The grip is arranged to be gripped by the pilot. The mount 104 may be mounted upon an optional linear guide 106 as shown in Figure 1a. In addition or as an alternative, the mount is mounted onto a linearly moveable portion 110 of a connector 108 described in more detail below. When used, linear guide 106 may help to constrain the motion of the grip 102 together with the mount 104 to a linear motion (i.e. motion in a straight line). Examples of a linear guide include a linear rail or rails.

A rotary actuator 114 is connected to mount 104 via a connector 108. The connector 108 is a mechanism for connecting the rotary actuator 114 to the mount 104 such that rotary motion of the rotary actuator 114 leads to linear motion of mount 104 and grip 102. Connector 108 comprises a rotatable portion 112 and a linearly moveable portion 110. Rotatable portion 112 is connected to rotary actuator 114 such that rotational movement of the rotary actuator is coupled to rotatable movement of the rotational portion. Linearly moveable portion 110 is connected to rotatable portion 112 such that rotation of the rotatable portion is coupled to linear movement of the linearly moveable portion.

Rotary actuator 114 controls the position of grip 102 on linear guide 106 via connector 108. Via the connector, rotational movement of the rotary actuator 114 translates to linear movement of the grip on the guide. The rotary actuator moves rotationally in response to a control signal 116, thus controlling the position of grip 102 on linear guide 106 in order to provide active feedback to the pilot.

Rotary actuator 114 may comprise any one or more of: DC motor, brushless DC motor, servo actuator, planetary gearbox, harmonic drive gearbox, multi-phase resolver, Hall effect sensor, or any other suitable rotary actuator.

The active linear throttle assembly comprises at least one detector 118 arranged to measure at least one of: a kinematic variable associated with the grip, and a force applied to the grip. Examples of kinematic variables include position, velocity, and acceleration. The at least one detector may be a position detector, a velocity detector, or an acceleration detector to detect the position, velocity or acceleration of grip 102. The at least one detector may in addition or alternatively be a force sensor to detect the force applied to grip 102 by the pilot. In various examples, the control signal 116 is determined using measured values of force or a kinematic variable e.g. position or velocity thus providing active feedback to the pilot.

In various examples, the control signal is determined based on a measurement of at least one kinematic variable such as position, velocity or acceleration associated with the grip and/or a measurement of the force applied to the grip.

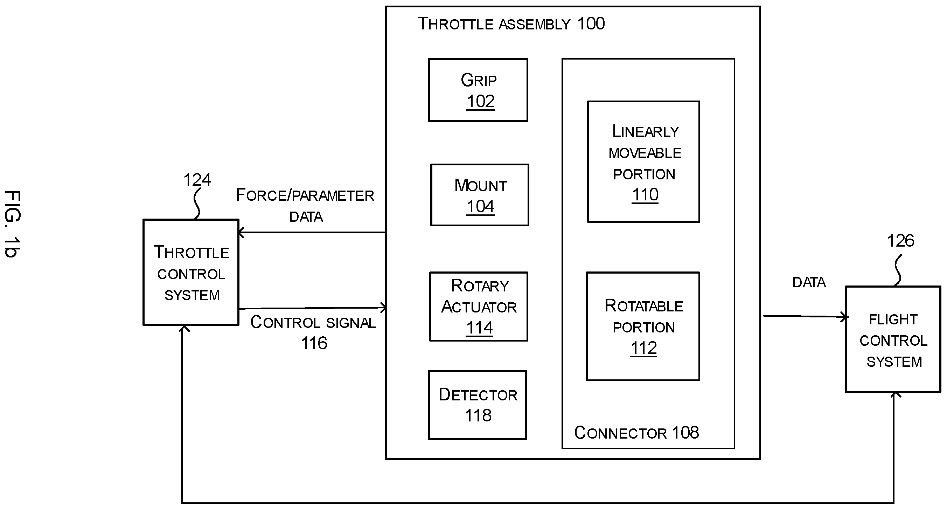

Figure 1b is a schematic diagram of an example active linear throttle assembly, a throttle control system and a flight control system. Grip 102, mount 104, rotary actuator 114, detector 118, and connector 108 with linearly moveable portion 110 and rotatable portion 112 are the same as the corresponding parts of Figure 1a.

As shown in Figure 1b, the throttle assembly unit 100 outputs data relating to the force applied to the grip and/or kinematic variables associated with the grip such as position, velocity, or acceleration to one or more of a throttle control system 124 and flight control system 126. The flight control system 126 uses these inputs (along with other inputs in some implementations) to control the aircraft engines (not shown in Figure 1b). The throttle control system 124 uses these inputs to control the rotary actuator 104 (e.g. to determine what haptic feedback to provide to the grip 102) and outputs a control signal to the throttle assembly unit 100 which provides control signal for the rotary actuator 104. As shown in Figure 1b, the throttle control system 124 may also communicate with the flight control system 126, e.g. to receive additional data (e.g. control characteristic data) that is then used to determine the haptic feedback required and hence generate the control data that is output to the throttle unit 100 to control the rotary actuator 104. Haptic feedback models may be stored and used to determine the control signals to generate based on the inputs received by the throttle control system 124. The control characteristic data that is received from the flight control system 126 may, for example, define aspects of the model that the grip is following (e.g. one or more of: positions of stops, forces required to overcome any stops, spring gradients, damping terms, etc.).

Control signal in various examples is a signal to provide detents, spring gradients, hard and soft stops, grip shaker function, along with any other custom response to force or position/velocity/acceleration of the grip. In various examples throttle system 124 is any suitable type of control system including for example open-loop, closed-loop, or feed-forward.

The control signal is determined based on a measurement of at least one kinematic variable and/or measurement of a force applied to the grip. Force or kinematic variable measurements are obtained using any suitable means.

Examples of position sensors suitable for measuring grip position include linear position sensors and rotary position sensors. Examples of linear position sensors include: a linearly variable differential transformer (LVDT), an optical linear track sensor, etc. Examples of rotary position sensors include a rotational variable differential transformer (RVDT) a rotary potentiometer or a resolver, etc. A linear position sensor in some examples is located on a linearly moving part of the active linear throttle assembly e.g. grip 102 or mount 104. A rotary position sensor in some examples is located on a rotationally moving part of the active linear throttle assembly e.g. rotatable portion 112 or any other suitable part of the assembly. In other examples, the rotary position sensor is mounted to another part of the throttle assembly and is connected to a rotationally moving part for example via a pantograph type arm.

Examples of suitable force sensors include an elastic element combined with a position sensor, an electrical resistance strain gauge, a foil strain gauge, a semiconductor strain gauge, a thin film strain gauge, a wire strain gauge, a piezoelectric transducer, a hydraulic load cell, a pneumatic load cell, a magno elastic force sensor, a vibration element, an induction based force sensor, a linearly variable differential transformer based force sensor, etc. The force sensor may be located at any position within the linear active throttle assembly 100. It is preferential for a force sensor to be located close to the grip 102 or on the grip 102 in order to allow for more accurate force detection. This is because mechanical effects such as backlash, friction, dynamic modes or the bending of internal components can corrupt the sensed force and cause differences (errors) between the force measured and the force actually applied by the pilot. The nearer the force sensor is to the point at which is force is applied (e.g. grip 102) the measurement of force is less likely to be affected by corruption.

Velocity and acceleration associated with the grip are measured in various examples. Velocity may be measured using: a brushless resolver which outputs velocity during demodulation, a moving coil type velocity transducer, a piezo electric velocity sensor or any other suitable means for measuring velocity. Acceleration may be measured using an accelerometer, or using any position or velocity based signal that is differentiated to form a second order derivative of time, or using any other suitable means.

In some examples, the force applied to grip 102 may be determined using motor current feedback. In such examples a separate force sensor may not be required. Detecting force via motor current and a force sensor provides advantageous redundancy. In other examples, a separate force sensor may be used. Current applied to the rotary motor can also be used by system monitors to check the health of the throttle system and flag errors in cases of failure.

Including a force sensor means that the active linear throttle assembly is able to act in jam mode. If the system becomes fully jammed then pilot-applied force detected via the force sensor can be used to set throttle position where the force sensor is suitably positioned under the grip. In the event of a partial jam allowing some range of movement, the actuator is set to drive and hold the grip to a single position to allow command by pilot-applied force.

The active linear throttle assembly may include any suitable combination of force sensor, velocity sensor, position sensor, acceleration sensor or any other sensor to measure a kinematic variable associated with the grip.

In various examples the active throttle assembly comprises a first limiter and a second limiter, wherein the mount is moveable linearly between the first limiter and second limiter. This restricts the range of movement of the mount and the grip in order to provide better control to the pilot. By keeping the grip within a certain range, it is ensured that the movement of the grip is linear and also that the pilot can always reach and move the grip.

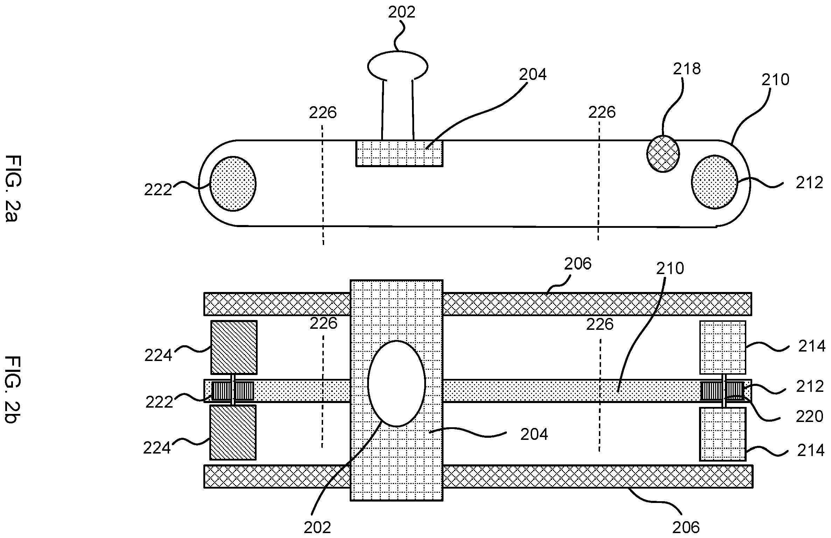

Figures 2a and 2b are schematic diagrams of an example active linear throttle assembly such as assembly 100 wherein the rotatable portion 112 of the connector 108 comprises a timing belt sprocket 212 and the linearly moveable portion 110 of the connector 108 comprises a portion of a timing belt 210. Figure 2a is a side view and Figure 2b is a top view.

Figures 2a and 2b show a grip 202 and a mount 204 which are examples of grip 102 and mount 104 in Figures 1a and 1b described above. Figure 2b also shows linear guide 206 which is an example of linear guide 106 described above. Linear guide 206 is shown as a pair of linear rails in Figure 2b but could be any other suitable form of linear guide. The mount may be supported by a linear rail (such as a round rod) and optionally a linear bearing to provide a smooth motion to the pilot and support any induced loads. Although a linear guide is shown in Figures 2a and 2b, the linear guide 106, 206 is optional and in addition or as an alternative the mount is mounted onto the linearly moveable portion of timing belt 210.

In the embodiment shown in Figure 2a and 2b, the connector 108 comprises a timing belt and a timing belt sprocket 212. Advantages of a timing belt include low inertia and low mass, which means that the size and mass of the motor and the throttle unit are reduced. Timing belt 210 may be a toothed timing belt with teeth moulded onto its inner surface. Teeth allow the transmission of greater torque and thus pilot loads, allowing the active system to create larger stops and ramps. Teeth also permit lower backlash. Timing belt 210 may be a cogged belt, a cog belt, or a synchronous belt. Timing belt 210 may be made from glass reinforced nylon or any other suitable material. Suitable materials generally have a high tensile strength and low elasticity to create a stiff system that is backlash free and can drive high loads. Suitable materials are also generally aerospace grade materials..

Timing belt 210 is arranged to run over timing belt sprocket 212. Timing belt sprocket 212 matches timing belt 210 such that if the timing belt is toothed, the sprocket has corresponding teeth to mesh with the timing belt.

Timing belt sprocket 212 is connected to rotary actuator 214. The connection may be via a shaft such as shaft 220 shown in Figure 2b. Shaft 220 may be a splined shaft. Rotational movement of rotary actuator 214 leads to rotational movement of timing belt sprocket 212. Rotational movement of timing belt sprocket 212 leads to linear movement of a portion of timing belt 210. The portion of timing belt 210 which moves linearly is for example the portion of timing belt between the dashed lines 226 in Figures 2a and 2b. In various examples, mount 204 is constrained to move between a first limiter and a second limiter. In those examples the portion of timing belt 210 which moves linearly may be the portion of timing belt between the first limiter and the second limiter. The limiters may be spring snubbers, deformable plastic blocks, hard limits, hard metal stops, or any other suitable limiters.

In some examples there is a first timing belt sprocket 212 and a second timing belt sprocket 222. The first timing belt sprocket is located at the first end of timing belt 210 and the second timing belt sprocket is located at the second end of the timing belt. The two sprockets support the ends of the timing belt and allow it to rotate. In other examples more timing belt sprockets may be used.

The connector comprising the timing belt sprocket 212 and the timing belt 210 means that rotational movement of rotary actuator 214 causes linear movement of mount 204 and grip 202. Timing belt 210 and timing belt sprocket 212 also are means of converting linear grip movement to rotary actuation in rotary actuator 214.

In various examples the active throttle assembly includes a timing belt tensioning device shown as 218 in Figure 2a. The timing belt tensioning device may also be known as a timing belt tensioner. The timing belt tensioning device 218 may be used to adjust the timing belt to be backlash free but not introduce too much friction in the system. The timing belt tensioning device may be cam nut, a sprung tensioner, slotted adjustable tensioner, or any other suitable device. A cam nut is mechanically simple and straightforward to assemble. A cam nut has the effect of taking out other build tolerances which are harder or more expensive to control.

In various examples there are also included one or more position sensors, velocity sensors, force sensors, acceleration sensors or other means for measuring kinematic variables associated with the grip or force applied to the grip by the pilot. In the example shown in Figures 2a and 2b, position of grip 202 can be measured at the opposite end of the timing belt to the rotary actuator via a rotary position sensor such as rotary position sensor 224 in Figure 2b. Rotary position sensor 224 is shown in Figure 2b as a rotationally variable differential transformer (RVDT)/resolver rotary position sensor. However, any suitable rotary position sensor may be used (including a rotary potentiometer rotary position sensor) at any suitable portion of the linear active throttle assembly such as at a rotating portion. Mounting a rotary position sensor to a rotationally moving part of the throttle assembly leads to reduced number of parts and lower mass along with improved accuracy of position measurements. In other examples, the rotary position sensor is mounted to another part of the throttle assembly and is connected to a rotationally moving part for example via a pantograph type arm. In some examples, the resolver of rotary actuator 214 is used to detect grip position.

In further examples, grip position is measured by a linear position sensor such as a linearly variable rotational transformer (LVDT) or optical linear track sensor. A linear sensor can be located at any position between mount 204 or linear guide 206 including on mount 204 or linear guide 206. This reduces errors or stiffness which could be introduced by the timing belt.

In some examples there is a force sensor to detect force applied to the grip 202 by the pilot. Attaching a force sensor to the mount 204 below the grip 202 reduces errors because the force sensor is located close to where the force is applied by the pilot, as described in more detail above. This position is also advantageous in the event of a jammed mechanism as described above.

Various examples also include means for measuring velocity and acceleration associated with the grip. Velocity may be measured using: a brushless resolver which outputs velocity during demodulation, a moving coil type velocity transducer, a piezo electric velocity sensor or any other suitable means for measuring velocity. Acceleration may be measured using an accelerometer, or using any position or velocity based signal that is differentiated to form a second order derivative of time, or using any other suitable means. Any suitable combination of force, position, velocity, and acceleration sensors may be used.

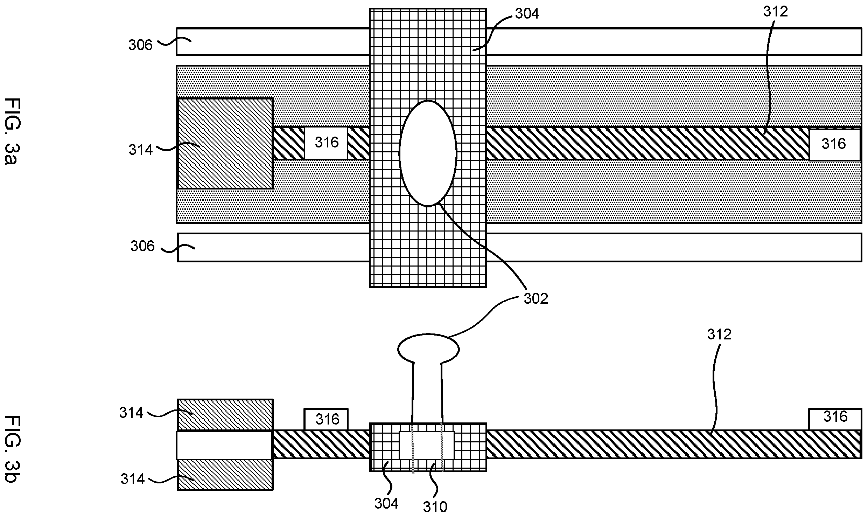

Figures 3a and 3b are schematic diagrams of an active linear throttle assembly such as assembly 100 wherein the rotatable portion 112 of the connector 108 comprises a screw and the linearly moveable portion 110 of the connector 108 comprises a screw nut 310. Figure 3a is a side view and Figure 3b is a top view.

Figures 3a and 3b show a grip 302 and a mount 304 which are examples of grip 102 and mount 104 in Figure 1a and Figure 1b described above. Figure 3b also shows linear guide 306 which is an example of linear guide 106 described above. Linear guide 306 is shown as a pair of linear rails in Figure 2b but could be any other suitable form of linear guide. The mount may be supported by a linear rail and optionally a linear bearing to provide a smooth motion to the pilot and support induced loads. Although a linear guide is shown in Figures 3a and 3b, the linear guide is optional and in addition or as an alternative the mount is mounted onto the screw nut 310.

Screw 312 may be a ball screw, a lead screw, or any other suitable type of screw. In some examples screw 312 is a ball screw and the screw nut 310 is a ball screw nut. Ball screws are capable of carrying heavy loads, they are less rigid and also do not self-lock. Ball screws also advantageously offer high precision, accuracy and efficiency. They are also easier to backdrive and with less friction. Furthermore, ball screws allow additional gearing, providing greater forces or velocities for a given motor choice. In other examples screw 312 is a lead screw and the screw nut is a lead screw nut. Lead screws offer precise and accurate linear motion, are more straightforward to manufacture and have a large load carrying capability. Lead screws also allow for additional gearing, they are lightweight and have less inertia.. Screw 312 is connected to rotary actuator 314 which is an example of rotary actuator 114 described above. Rotational movement of rotary actuator 314 causes rotational movement of screw 312. Connected to screw 312 is screw nut 310 shown in Figure 2a. If the screw is a ball screw then the screw nut is a ball screw nut, and if the screw is a lead screw then the screw nut is a lead screw nut. Rotational movement of screw 312 leads to linear movement of screw nut 310. The screw nut 310 is attached to the mount 304 such that when the screw nut moves linearly, the mount and grip move linearly correspondingly.

The connector comprising the screw 312 and the screw nut 310 means that rotational movement of rotary actuator 314 causes linear movement of mount 304 and grip 302. The screw and screw nut are also means of converting linear grip movement to rotary actuation of the rotary actuator. Using a screw and a screw nut advantageously reduces system inertia, and is relatively cheap to produce.

In various examples the throttle assembly such as the throttle assembly in Figures 3a and 3b includes limiters 316. Figures 3a and 3b show two limiters 316 positioned along the screw 312. The limiters may be spring snubbers, deformable plastic blocks, hard limits, hard metal stops, or any other suitable limiters. This restricts the range of movement of the mount and the grip in order to provide better control to the pilot. By keeping the grip within a certain range, it is ensured that the movement of the grip is linear and also that the pilot can always reach and move the grip.

In various examples there are also included one or more position sensors, velocity sensor, acceleration sensors, force sensors, or other means for measuring kinematic variables associated with the grip or force applied to the grip 302 by the pilot. In the example shown in Figures 3a and 3b, position of grip 302 can be measured via a rotary position sensor which may be a rotationally variable differential transformer (RVDT), a resolver, a rotary potentiometer rotary position sensor, or any other suitable rotary position sensor. A rotary position sensor in some examples is located on a suitable rotating portion of the linear active throttle assembly for example screw 312. Mounting a rotary position sensor to a rotationally moving part of the throttle assembly leads to reduced number of parts and lower mass along with improved accuracy of position measurements. In other examples, the rotary position sensor is mounted to another part of the throttle assembly and is connected to a rotationally moving part for example via a pantograph type arm. In some examples, the resolver of rotary actuator 314 is used to detect grip position.

In further examples, grip position is measured by a linear position sensor such as a linearly variable rotational transformer (LVDT) or optical linear track sensor. A linear sensor may be located at any position between the mount 304 and the linear guide 306 including being located at the mount 304 or linear guide 306.

In some examples there is a force sensor to detect force applied to the grip 302 by the pilot. Attaching a force sensor to the mount 304 below the grip 202 reduces errors because the force sensor is located close to where the force is applied by the pilot, as described in more detail above. This position is also advantageous in the event of a jammed mechanism as described above.

Various examples also include means for measuring velocity and acceleration associated with the grip. Velocity may be measured using: a brushless resolver which outputs velocity during demodulation, a moving coil type velocity transducer, a piezo electric velocity sensor or any other suitable means for measuring velocity. Acceleration may be measured using an accelerometer, or using any position or velocity based signal that is differentiated to form a second order derivative of time, or using any other suitable means. Any suitable combination of force, position, velocity, and acceleration sensors may be used.

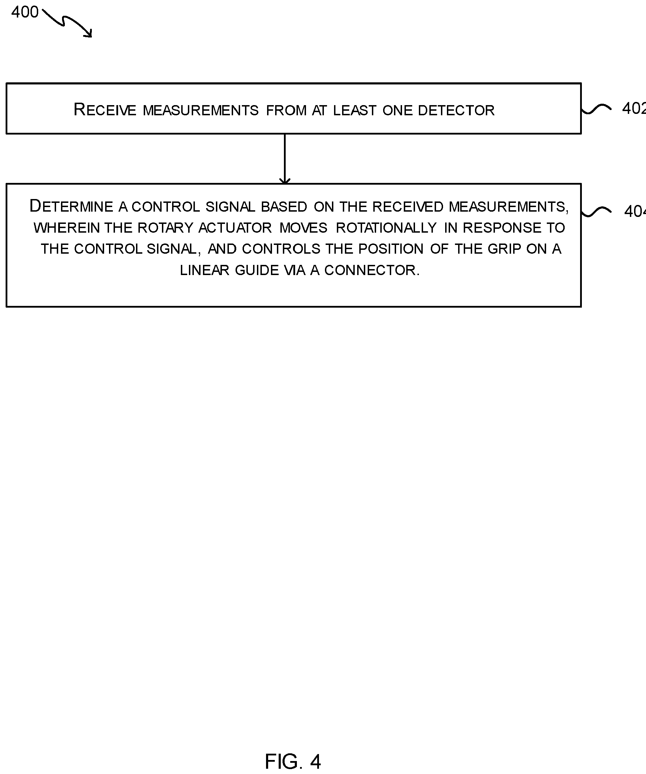

Figure 4 is a schematic diagram of an example method for controlling an active throttle assembly such as the assembly in Figures 1a, 1b, 2a, 2b, 3a or 3b. The active throttle assembly comprises a grip which is moveable linearly, a mount to which the grip is attached, a rotary actuator, and a connector arranged to connect the rotary actuator to the mount. The method may be performed by throttle control system 124 in Figure 1b.

At block 402, measurements from at least one detector are received. The measurements may relate to position of the grip, velocity of the grip, or force applied to the grip by a pilot. At block 404, a control signal is determined based on the received measurements. In response to the control signal, the rotary actuator moves rotationally. This controls the position of the grip on the linear guide via the connector.

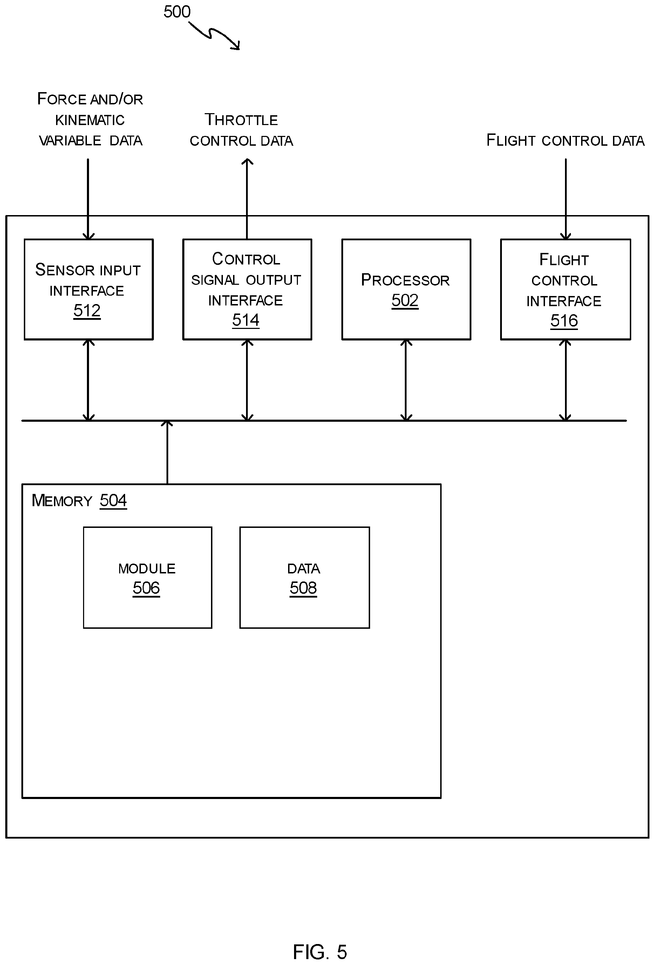

Figure 5 is a schematic diagram of a computing device 500 that is configured to implement the methods of controlling an active throttle assembly as shown in Figure 4 and hence may act as the throttle control system 124 in Figure 1b.

The computing device 500 comprises one or more processors 502 and a memory 504 arranged to store executable instructions that are executed by the processor 502. The memory 504 is arranged to store a module 506 that comprises instructions that, when executed by the processor 502, cause the computing device 500 to perform the method of Figure 4. The memory 504 may also store data 508 that is used and/or updated by the module 506, such as a haptic feedback model. These models define how the control signal is generated that operates the actuator assembly.

As shown in Figure 5, the computing device 500 also comprises a plurality of interfaces such as a sensor input interface 512 that is configured to receive the force and/or kinematic variable data, a control signal output interface 514 that is configured to output throttle control data to the active throttle assembly unit 100 and a flight control interface 516 that is configured to communicate with a flight control system 126 and to receive flight control data.

In the example shown in Figure 5, the computing device 500 comprises a flight control interface 516. In other examples a single computing device may operate as both the flight control system 126 and the throttle control system 124 and, in such examples, the flight control interface may be replaced by one or more interfaces that receive data from other sensors and systems in the aircraft and the memory 504 may comprise a flight control system module.

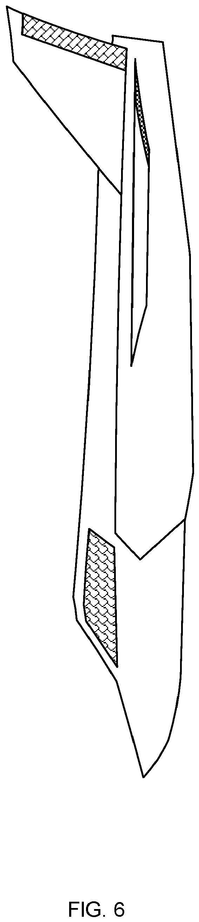

Figure 6 shows a vehicle (i.e., an aircraft) comprising the active linear throttle assembly described herein.

## Claims

1. An active throttle assembly comprising:
a grip (102) which is moveable linearly;
a mount (104) to which the grip is attached, wherein the mount and the grip are moveable together;
a rotary actuator (114);
a connector (108) arranged to connect the rotary actuator to the mount, the connector comprising:
a rotatable portion (112) connected to the rotary actuator, wherein rotational movement of the rotary actuator is coupled to rotational movement of the rotatable portion, and
a linearly moveable portion (110) connected to the rotatable portion, wherein rotation of the rotatable portion is coupled to linear movement of the linearly moveable portion,
the mount (104) being attached to the linearly moveable portion,
wherein the rotary actuator (114) is configured to control, via the connector (108), a position of the grip (102), the rotary actuator moving rotationally in response to a control signal (116);
at least one detector (118) arranged to measure at least one of a kinematic variable associated with the grip and a force applied to the grip.

2. The active throttle assembly according to claim 1 further comprising a linear guide (106) wherein the mount (104) is mounted upon the linear guide and the mount and the grip (102) are moveable together along the linear guide and wherein the position of the grip is a position of the grip on the linear guide.

3. The active throttle assembly according to claim 1 or claim 2 wherein the rotatable portion of the connector (112) comprises a timing belt sprocket (212) and the linearly moveable portion of the connector (110) comprises a portion of a timing belt (210).

4. The active throttle assembly according to claim 3 wherein the timing belt (210) is a toothed timing belt, and/or wherein the active throttle assembly further comprises a timing belt tensioning device (218).

5. The active throttle assembly according to any of claims 3 - 4 wherein the timing belt sprocket (212) is a first timing belt sprocket located at a first end of the timing belt and wherein the active throttle assembly further comprises a second timing belt sprocket (222) located at a second end of the timing belt.

6. The active throttle assembly according to claim 1 or claim 2 wherein the rotatable portion of the connector (110) comprises a screw (308) and the linearly moveable portion of the connector (112) comprises a screw nut (310).

7. The active throttle assembly according to claim 6 wherein the screw (308) is a ball screw and the screw nut (310) is a ball screw nut, or wherein the screw (308) is a lead screw and the screw nut (310) is a lead screw nut.

8. The active throttle assembly according to any preceding claim wherein the at least one detector (118) includes one or more of the following: a linear position sensor, a rotary position sensor, a velocity sensor, an acceleration sensor, a force sensor.

9. The active throttle assembly according to claim 8 wherein the linear position sensor is one of: a linearly variable differential transformer, LVDT, or an optical linear track sensor; and/or
wherein the rotary position sensor is one of: a rotational variable differential transformer, RVDT, a rotary potentiometer or a resolver; and/or
wherein the force sensor is one of: an elastic element combined with a position sensor, an electrical resistance strain gauge, a foil strain gauge, a semiconductor strain gauge, a thin film strain gauge, a wire strain gauge, a piezoelectric transducer, a hydraulic load cell, a pneumatic load cell, a magno elastic force sensor, a vibration element, an induction based force sensor, a linearly variable differential transformer based force sensor.

10. The active throttle assembly according to claim 8 or claim 9 wherein the linear position sensor is attached to the mount (104) and/or wherein the force sensor is attached to the mount (104).

11. The active throttle assembly according to any preceding claim wherein the rotary actuator (114) is a rotary motor and the at least one detector includes a current detector arranged to measure current applied to the rotary motor.

12. The active throttle assembly according to any preceding claim further comprising a first limiter and a second limiter (316), wherein the mount is moveable linearly between the first limiter and the second limiter.

13. The active throttle assembly according to any preceding claim wherein the control signal (116) is determined based on a measurement of the at least one kinematic variable associated with the grip and/or a measurement of the force applied to the grip.

14. The active throttle assembly according to any preceding claim wherein the kinematic variable is position, velocity or acceleration.

15. A method for controlling an active throttle assembly, the active throttle assembly comprising:
a grip (102) which is moveable linearly;
a mount (104) to which the grip is attached wherein the mount and the grip are moveable together;
a rotary actuator (114);
a connector (108) arranged to connect the rotary actuator to the mount, the connector comprising:
a rotatable portion (112) connected to the rotary actuator, wherein rotational movement of the rotary actuator is coupled to rotational movement of the rotatable portion, and
a linearly moveable portion (110) connected to the rotatable portion, wherein rotation of the rotatable portion is coupled to linear movement of the linearly moveable portion,
the mount (104) being attached to the linearly moveable portion,
at least one detector (118) arranged to measure at least one of a kinematic variable associated with the grip and a force applied to the grip, the method comprising:
receiving measurements from the at least one detector (402); and
determining a control signal based on the received measurements,
wherein the rotary actuator moves rotationally in response to the control signal, and controls the position of the grip via the connector (404).
